# EUROPÄISCHE PATENTSCHRIFT

(11) **EP 0 353 643 B1**
(45) Veröffentlichungstag und Bekanntmachung des Hinweises auf die Patenterteilung: **03.05.1995**
(21) Anmeldenummer: 89113935.4
(22) Anmeldetag: 28.07.1989
(51) Int. Cl.: B60S 1/52

(54) **Beheizbare Scheibenwaschanlagendüse**
Thermal windscreen washer nozzle
Gicleur d'installation de lavage de vitres pouvant être chauffé

(30) Priorität: 05.08.1988 DE 3826646
(43) Veröffentlichungstag der Anmeldung: 07.02.1990
(73) Patentinhaber: AUDI AG, 85045 Ingolstadt (DE)
(72) Erfinder: Seufert, Martin, D-8079 Kipfenberg (DE); Pickl, Michael, D-8071 Hepberg (DE)
(74) Vertreter: Le Vrang, Klaus

(56) Entgegenhaltungen:
- DE-U- 8 431 147
- DE-U- 8 704 903
- US-A- 4 330 704
- PATENT ABSTRACTS OF JAPAN vol. 11, no. 196 (M-601)(2643) 24. Juni 1987 & JP-A-62 020 752 (JIYUN ITANI) 29. Januar 1987

## Beschreibung

Die Erfindung betrifft eine beheizbare Scheibenwaschanlagendüse. Eine derartige Düse ist beispielsweise aus dem deutschen Gebrauchsmuster 84 31 147 bekannt. Der Düsenkörper wird aus elektrisch leitfähigem Kunststoff, der sich bei Stromdurchfluß erwärmt, hergestellt. Damit wird bei Temperaturen von unterhalb von 0° C ein Einfrieren des durch die Scheibenwaschanlagendüse auf die Windschutzscheibe aufgebrachten Wassers verhindert.

In der Praxis haben sich derartige Düsen nicht bewährt, da die Materialanforderungen an die Düse durch den elektrisch leitfähigen Kunststoff nicht erfüllt werden.

Aus dem DE-U 87 04 903 ist eine beheizbare Scheibenwaschanlagendüse bekannt, die aus Außenhülle und Einsatz besteht. Der Einsatz weist Heizleiter auf, die in Wicklungen um den Wasserkanal geführt sind. Diese Spritzdüse weist einen verhältnismäßig hohen Fertigungsaufwand auf.

Es finden deshalb nach wie vor Scheibenwaschanlagendüsen Verwendung, bei denen ein Metalleinsatz in die Kunststoffdüse eingebettet ist, dem über ein PTC-Element Strom zugeführt wird, was bei Stromdurchfluß zur Erwärmung führt.

Aufgabe der Erfindung ist es, eine zuverlässig arbeitende und kostengünstige Scheibenwaschanlagendüse herzustellen.

Die Erfindung wird gelöst durch den Anspruch 1.

Erfindungsgemäß ist vorgesehen, daß die Scheibenwaschanlagendüse gebildet wird aus einer Außenhülle und einem einzuführenden Einsatz, wobei die Außenhülle aus einem nichtleitenden Kunststoff bestehen kann, dessen Materialauslegung in herkömmlicher Weise auf die Anforderungen optimal abgestimmt werden kann.

Der Einsatz wird preiswerter als durch ein Metallelement mit PTC-Pille durch einen Körper aus elektrisch leitfähigem Kunststoff gebildet. Bei Stromzufuhr erwärmt sich dieser Körper und verhindert somit ein Festfrieren des Wassers. Der Zuführkanal zur Ausströmöffnung, die sich in der Außenhülle befindet, ist somit, da er in den leitfähigen Kunststoff eingebettet oder von diesem umschlossen ist, bei Stromzufuhr erwärmt.

Bevorzugte Ausführungsformen sind in den Unteransprüchen beschrieben. Als montagefreundliche Anordnung hat sich eine Ausbildung erwiesen, bei der der Einsatz in die Außenhülle eingerastet werden kann, also federnde Vorsprünge in Außenhülle oder Einsatz vorgesehen sind, die in entsprechende Vertiefungen eingreifen.

Die Anschlußfahnen können durch Klemmwirkung befestigt werden, Alternativen sind Ultraschweißen oder Einspritzen oder Eingießen.

Im folgenden wird die Erfindung anhand der Zeichnung erläutert. Es zeigen:
- Fig. 1: eine erste Schnittansicht der erfindungsgemäßen Scheibenwaschanlagendüse;
- Fig. 2: eine geschnittene Ansicht der Außenhülle;
- Fig. 3: eine Schnittansicht des Einsatzes;
- Fig. 4: eine weitere Schnittansicht des Einsatzes; und
- Fig. 5: den Einsatz in einer dritten Ausführungsform der Erfindung.

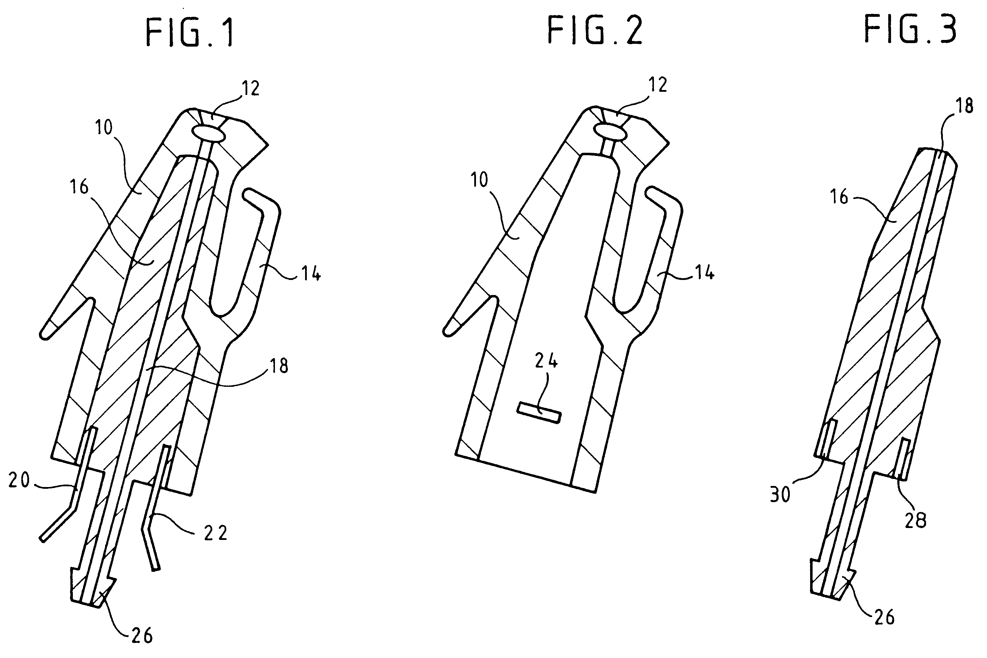

In Fig. 1 ist die erfindungsgemäße beheizbare Scheibenwaschanlagendüse in Schnittansicht dargestellt. Eine Außenhülle 10 besitzt an ihrem vorderen Ende eine Öffnung 12, der rückwärtig Waschwasser zugeführt wird und nach vorne in Richtung Scheibe ausgespritzt wird.

Ein Rastvorsprung 14 dient zur Befestigung der Scheibenwaschanlagendüse in einer Öffnung des Karosseriebleches.

In die Außenhülle einschiebbar ist ein Einsatz 16, der einen Wasserzuführungskanal 18 aufweist. Am hinteren Ende findet sich ein Anschlußstutzen 26, auf den ein Schlauch aufzuführen ist, am vorderen Ende mündet der Kanal 18 in der Ausspritzöffnung 12.

Zwei Stromanschlußfahnen 20 und 22 sind zu einander gegenüberliegenden Seiten des Einsatzes geführt. Der Einsatz 16 besteht aus elektrisch leitfähigem Kunststoff, beispielsweise aus einem Thermoplast mit Ruß-, Kohlefaser-, Metall- oder Silbernitrateinlagerungen. Bei Anlegen eines Stromes an die Anschlußfahnen bildet der Kunststoffkörper einen ohmschen Widerstand und erwärmt sich bei Stromdurchfluß.

In Fig. 2 ist die Außenhülle 10 dargestellt, die an ihrer Innenwandung eine Rastausnehmung 24 aufweist. In Fig. 3 ist der Einsatz dargestellt, wobei Schlitze 28 und 30 vorgesehen sind, die die Stromanschlußfahnen 20 und 22 mit den Zuführungskabeln aufnehmen. Nach Einführen der elektrisch leitenden Fahnen können diese beispielsweise ultraschallverschweißt oder mittels eines heißen Stempels eingeschweißt werden.

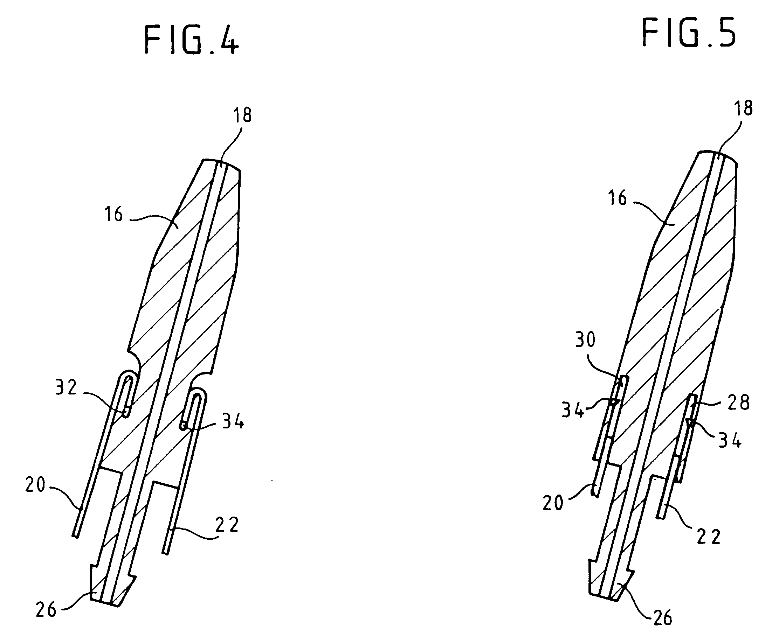

In Fig. 4 ist eine Alternative der Befestigung vorgesehen. Es sind für die Aufnahme der Stromanschlußfahnen 20 und 22 Öffnungen 32 und 34 vorgesehen, die in Spritzrichtung geführt sind, während die Fahnen nach hinten wegführen. Dadurch müssen zum Einfügen der Fahnen 20 und 22 in die Öffnungen 32 und 34 die Fahnen 20 und 22 nach hinten umgeknickt werden. Nach Einführen des Einsatzes 16 in die Außenhülle 10 werden dementsprechend die Fahnen 32 und 34 verklemmt und somit gehalten.

Eine weitere Möglichkeit ist in Fig. 5 dargestellt. Die Ausführung nach Fig. 5 arbeitet mit der Außenhülle, wie sie in Fig. 2 dargestellt ist, zusammen. In Schlitze 28 und 30 werden die Stromfahnen 20 und 22 eingeführt und drücken damit Rastnasen 34 nach außen, die sich in die Rastausnehmungen 24 bewegen und somit den Einsatz 16 in der Außenhülle 10 fixieren.

Zur Montage wird also der Einsatz 16 in die Außenhülle 10 gesteckt, durch das Einführen der Anschlußfahnen 20 und 22 in die Schlitze 28 und 30 greifen die Rastungen 34 in die Rastausnehmungen 24 und verriegeln den Einsatz in der Außenhülle.

## Patentansprüche

1. Beheizbare Scheibenwaschanlagendüse mit einer aus nicht leitendem Material, vorzugsweise aus Kunststoff, bestehenden Außenhülle (10), an deren vorderen Ende die Spritzdüse (12) vorgesehen ist, und einem in die Außenhülle (10) einführbaren heizbaren Einsatz (16), der einen zur Spritzdüse führenden Wasserkanal (18) enthält, wobei Stromanschlußfahnen (20, 22) an dem Einsatz (16) vorgesehen sind, dadurch gekennzeichnet, daß der Einsatz (16) aus elektrisch leitfähigem Kunststoff besteht.

2. Düse nach Anspruch 1, dadurch gekennzeichnet, daß der Einsatz in die Außenhülle einrastbar ist.

3. Düse nach Anspruch 1 oder 2, dadurch gekennzeichnet, daß die Stromanschlußfahnen zwischen Einsatz und Außenhülle festgeklemmt sind.

4. Düse nach Anspruch 1 oder 2, dadurch gekennzeichnet, daß die Stromanschlußfahnen eingespritzt sind.

5. Düse nach einem der Ansprüche 1 bis 3, dadurch gekennzeichnet, daß die Stromanschlußfahnen ultraschallverschweißt sind.

6. Düse nach einem der vorhergehenden Ansprüche, dadurch gekennzeichnet, daß der Einsatz aus leitfähigem Kunststoff mi der nichtleitenden Außenhülle umspritzt ist.

7. Düse nach einem der vorhergehenden Ansprüche, dadurch gekennzeichnet, daß der heizbare Einsatz aus leitfähigem Kunststoff in die Außenhülle eingespritzt ist.

## Claims

1. Heatable windshield washing system nozzle having an outer sleeve (10) made of a non-conductive material, preferably plastic, on the front end of which is the spray nozzle (12), and having a heatable insert (16) which is adapted to be introduced into the outer sleeve (10) and contains a water channel (18) leading to the spray nozzle, and current terminal lugs (20, 22) being provided on the insert (16), characterised in that the insert (16) consists of electroconductive plastic.

2. Nozzle according to claim 1, characterised in that the insert is adapted to be locked home into the outer sleeve.

3. Nozzle according to claim 1 or 2, characterised in that the current terminal lugs are clamped between the insert and the outer sleeve.

4. Nozzle according to claim 1 or 2, characterised in that the current terminal lugs are injected.

5. Nozzle according to any of claims 1 to 3, characterised in that the current terminal lugs are ultrasonically welded.

6. Nozzle according to any of the preceding claims, characterised in that the insert made from conductive plastic is encapsulated by the non-conductive outer sleeve.

7. Nozzle according to any of the preceding claims, characterised in that the heatable insert made from conductive plastic is injected into the outer sleeve.

## Revendications

1. Gicleur chauffable pour installation de lavage de vitres, comprenant une enveloppe extérieure (10) qui est faite d'une matière non conductrice, de préférence de matière plastique, et à l'extrémité avant de laquelle est prévue la buse de pulvérisation (12), ainsi qu'un insert chauffable (16) qui peut être introduit dans l'enveloppe extérieure (10) et qui contient le conduit d'eau (18) aboutissant à la buse de pulvérisation, des bornes de connexion électrique (20, 22) étant prévues sur l'insert (16), caractérisé en ce que l'insert (16) est fait d'une matière plastique électroconductrice.

2. Gicleur selon la revendication 1, caractérisé en ce que l'insert peut être encliqueté dans l'enveloppe extérieure.

3. Gicleur selon la revendication 1 ou 2, caractérisé en ce que les bornes de connexion électrique sont coincées entre l'insert et l'enveloppe extérieure.

4. Gicleur selon la revendication 1 ou 2, caractérisé en ce que les bornes de connexion électrique sont incluses par moulage par injection.

5. Gicleur selon l'une quelconque des revendications 1 à 3, caractérisé en ce que les bornes de connexion électrique sont soudées par ultrasons.

6. Gicleur selon l'une quelconque des revendications 1 à 5, caractérisé en ce que l'insert en matière plastique conductrice est recouvert de l'enveloppe extérieure non conductrice par moulage par injection.

7. Gicleur selon l'une quelconque des revendications 1 à 6, caractérisé en ce que l'insert chauffable en matière plastique conductrice est injecté dans l'enveloppe extérieure.
